# FASCICULE DE BREVET EUROPEEN

(11) **EP 2 551 541 B1**
(45) Date de publication et mention de la délivrance du brevet: **31.12.2014**
(21) Numéro de dépôt: 12177384.0
(22) Date de dépôt: 20.07.2012
(51) Int. Cl.: F16C 35/067, F16C 43/04

(54) **Procédé d'assemblage d'une bride de fixation autour d'une bague extérieure d'un roulement**
Montageverfahren eines Befestigungsflansches um einen Außenring eines Lagers
Method for assembling a clamp around an outer ring of a bearing

(30) Priorité: 28.07.2011 FR 1156914
(43) Date de publication de la demande: 30.01.2013
(73) Titulaire: NTN-SNR Roulements, 74000 Annecy (FR)
(72) Inventeur: Mermoud, Gérard, 74330 La Balme de Sillingy (FR)
(74) Mandataire: Sayettat, Julien Christian

(56) Documents cités:
- DE-A1- 10 355 363
- DE-U1- 20 019 278

## Description

L'invention concerne un procédé d'assemblage d'une bride de fixation autour d'une bague extérieure d'un roulement, un roulement comprenant une bride de fixation assemblée sur sa bague extérieure ainsi qu'un montage d'un arbre tournant dans un carter au moyen d'un tel roulement.

Un tel procédé est connu du document DE 200 19 278 U.

L'invention s'applique plus particulièrement au montage d'un arbre primaire ou secondaire dans un carter d'une boîte de vitesses de véhicule automobile.

Pour ce faire, on connaît un roulement dont la bague extérieure présente une gorge périphérique formée entre une portée avant présentant un premier diamètre et une portée arrière présentant un deuxième diamètre qui est supérieur audit premier diamètre. En outre, la bride présente un alésage dont le diamètre est compris entre lesdits premier et deuxième diamètres.

Ainsi, par coulissement relatif de l'alésage autour de la portée avant, on peut monter la bride en appui axial sur la portée arrière avec ledit alésage en regard radial de la gorge. Ensuite, l'assemblage peut être réalisé en poinçonnant axialement le bord de l'alésage de sorte à former des bourrelets de matière qui s'étendent radialement dans l'alésage pour être disposés dans la gorge afin d'interférer avec elle.

Toutefois, cet assemblage nécessite un effort axial de poinçonnage qui est important et induit une déformation de la matière qui est difficilement contrôlable. Il en résulte que la géométrie des bourrelets ne peut pas être définie de façon fiable, alors même que le comportement mécanique de l'assemblage en dépend directement.

En particulier, il peut être souhaité que l'assemblage soit réalisé avec un jeu axial et/ou radial défini entre la bride et le roulement, notamment afin de permettre le montage d'un arbre tournant dans un carter d'une boîte de vitesses.

L'invention a pour but de résoudre les problèmes de l'art antérieur en proposant notamment un procédé d'assemblage d'une bride de fixation autour d'une bague extérieure d'un roulement, ledit procédé permettant de contrôler de façon simple et peu contraignante l'interférence entre ladite bride et ladite bague afin de pouvoir fiabiliser l'obtention du comportement mécanique souhaité pour ledit assemblage.

A cet effet, et selon un premier aspect, l'invention propose un procédé d'assemblage d'une bride de fixation autour d'une bague extérieure d'un roulement, ladite bague présentant une gorge périphérique formée entre une portée avant présentant un premier diamètre et une portée arrière présentant un deuxième diamètre qui est supérieur audit premier diamètre, ladite bride présentant un alésage dont le diamètre est compris entre lesdits premier et deuxième diamètres, ledit procédé comprenant les étapes suivantes :
- prévoir une bride comprenant des orifices dont le bord intérieur est équipé d'une barrette déformable radialement entre un état de montage dans lequel lesdites barrettes sont inscrites dans le diamètre de l'alésage et un état déformé dans lequel lesdites barrettes délimitent un diamètre inscrit qui est inférieur au premier diamètre ;
- monter la bride autour de la bague par coulissement relatif de l'alésage autour de la portée avant pour mettre les barrettes, en état de montage, en regard radial de la gorge ;
- déformer radialement les barrettes pour les disposer au moins en partie dans la gorge afin d'assurer l'assemblage de ladite bride par interférence entre le premier diamètre et le diamètre inscrit délimité par lesdites barrettes.

Selon un deuxième aspect, l'invention propose un roulement comprenant une bague extérieure, une bague intérieure et des corps roulants disposés entre lesdites bagues pour permettre leur rotation relative, ledit roulement comprenant en outre une bride de fixation qui est assemblée autour de la bague extérieure par mise en oeuvre d'un tel procédé, ladite bague présentant une gorge périphérique formée entre une portée avant présentant un premier diamètre et une portée arrière présentant un deuxième diamètre qui est supérieur audit premier diamètre, ladite bride présentant un alésage dont le diamètre est compris entre lesdits premier et deuxième diamètres, ladite bride comprenant des orifices dont le bord intérieur est équipé d'une barrette qui est disposée au moins en partie dans la gorge, lesdites barrettes délimitant un diamètre inscrit qui est inférieur au premier diamètre.

Selon un troisième aspect, l'invention propose un ensemble comprenant un arbre tournant et un carter dans lequel l'arbre est monté dans le carter au moyen d'un tel roulement, ledit arbre étant solidarisé à la bague intérieure et la bride étant fixée au carter.

D'autres objets et avantages de l'invention apparaîtront dans la description qui suit, faite en référence aux figures jointes, dans lesquelles :
- la figure 1 est une représentation partielle et en coupe longitudinale d'un montage d'un arbre tournant dans un carter au moyen d'un roulement selon un mode de réalisation de l'invention ;
- la figure 2 représente en perspective une bague extérieure selon un mode de réalisation de l'invention ;
- les figures 3 représentent en perspective une bride de fixation selon respectivement un mode de réalisation de l'invention ;
- la figure 4 représente en perspective un outil pour l'assemblage de la bride des figures 3 autour de la bague extérieure de la figure 2 ;
- la figure 5 est une vue éclatée de la disposition relative de l'outil, de la bague extérieure et de la bride pour réaliser l'assemblage selon un mode de réalisation de l'invention ;
- les figures 6 sont des vues illustrant une étape du procédé d'assemblage, respectivement en vue arrière (figure 6a) et en coupe suivant la ligne AA de la figure 6a (figure 6b) ;
- les figures 7 sont des vues analogues aux figures 6 après assemblage de la bride autour de la bague extérieure.

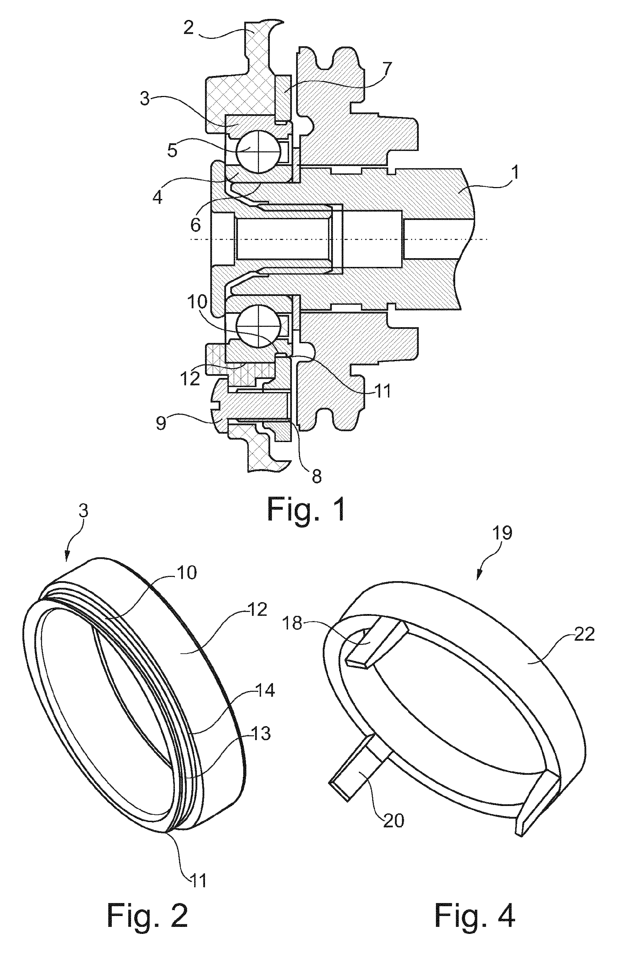

En relation avec la figure 1, on décrit le montage d'un arbre 1 primaire ou secondaire dans un carter 2 d'une boîte de vitesses de véhicule automobile, ledit montage étant réalisé au moyen d'un roulement comprenant une bague extérieure 3, une bague intérieure 4 et des corps roulants 5 disposés entre lesdites bagues pour permettre leur rotation relative.

Dans le mode de réalisation représenté, la bague intérieure 4 est tournante en étant solidarisée autour de l'arbre 1 par emmanchement dans un logement 6 dudit arbre prévu à cet effet, la bague extérieure 3 est fixe et les corps roulants 5 sont sous la forme de billes.

La bague extérieure 3 est équipée d'une bride de fixation 7 qui permet le montage de l'arbre 1 en rotation dans le carter 2. Pour ce faire, la bride 7 est assemblée autour de la bague extérieure 3, ladite bride étant équipée de moyens permettant sa fixation au carter 2, par exemple sous la forme d'un orifice 8 coopérant avec une vis 9 du carter 2.

En relation avec la figure 2, la bague extérieure 3 présente une gorge périphérique 10 formée entre une portée avant 11 présentant un premier diamètre et une portée arrière 12 présentant un deuxième diamètre qui est supérieur audit premier diamètre. En particulier, les portées 11, 12 présentent une surface extérieure annulaire délimitant leur diamètre respectif, la portée avant 11 s'étend jusqu'au bord avant et la portée arrière 12 s'étend jusqu'au bord arrière de la bague extérieure 3.

Par ailleurs, la dimension axiale de la portée arrière 12 est plus importante que celle de la portée avant 11 de sorte à disposer la gorge 10 latéralement vers l'avant de la bague extérieure 3. En outre, la portée arrière 12 est emmanchée dans un logement du carter 2 lors du montage de l'arbre tournant 1 dans ledit carter.

La gorge 10 présente une section en U dont chaque bord 13, 14 s'étend radialement pour relier le fond de la gorge 10 avec respectivement la portée avant 11 et la portée arrière 12. Ainsi, la dimension radiale du bord 13 de la portée avant 11 est inférieure à celle du bord 14 de la portée arrière 12, la gorge 10 présentant un diamètre extérieur au niveau de son fond qui est inférieur au premier diamètre ainsi qu'une dimension axiale délimitée entre les bords 13, 14.

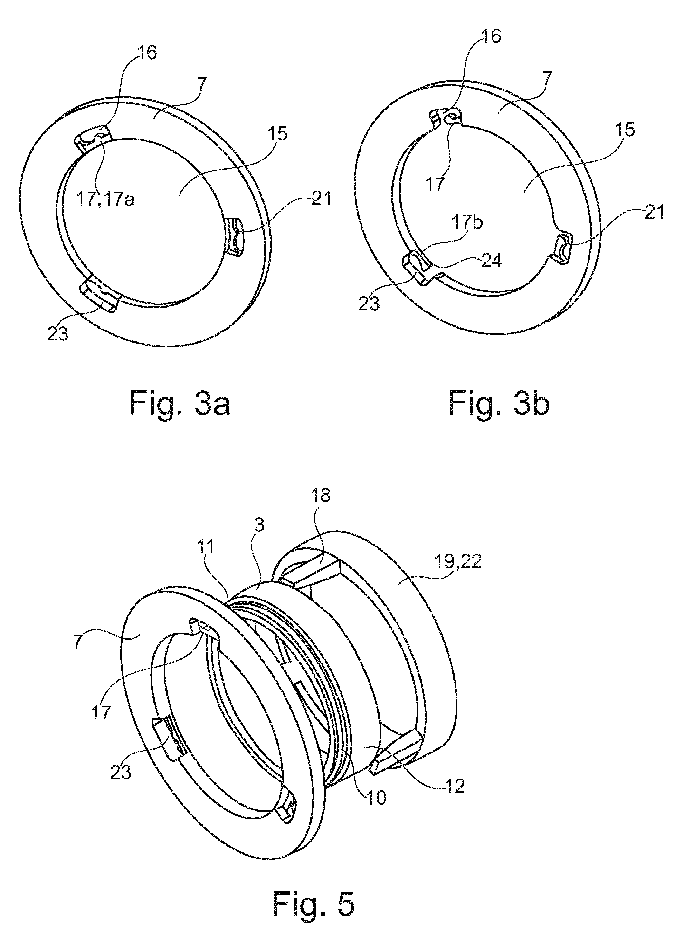

En relation avec les figures 3, la bride 7 présente une couronne de matière (sur ces figures, les moyens d'association de la bride ne sont pas représentés) délimitant un alésage 15 dont le diamètre est compris entre les premier et deuxième diamètres. L'épaisseur de la couronne est sensiblement égale à la somme des dimensions axiales de la portée avant 11 et de la gorge 10.

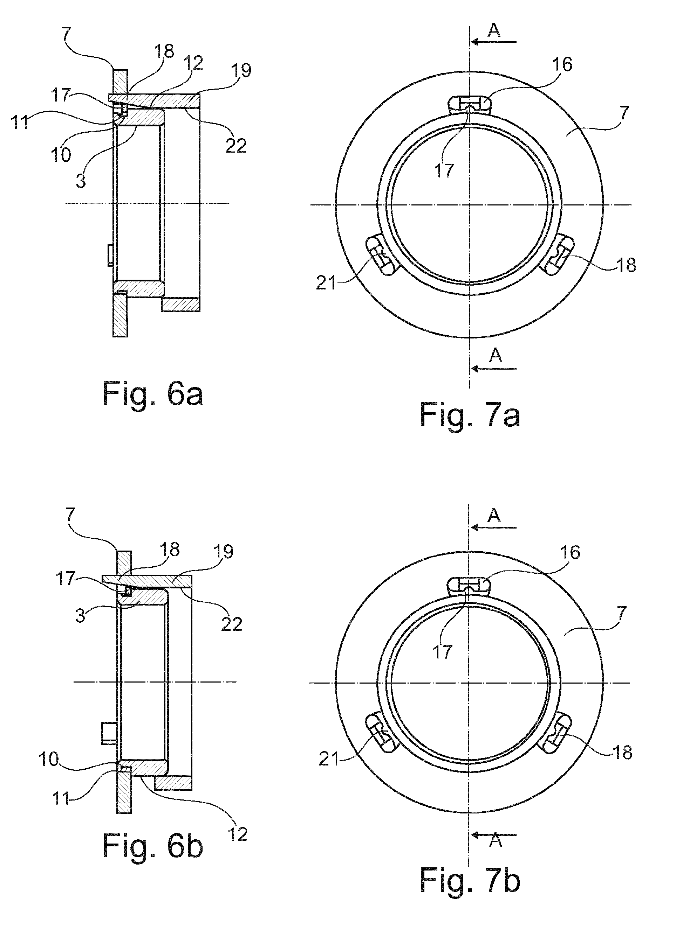

La bride 7 comprend des orifices 16 dont le bord intérieur est équipé d'une barrette 17 déformable radialement entre un état de montage (figures 3) dans lequel lesdites barrettes sont inscrites dans le diamètre de l'alésage 15 et un état déformé (figure 7) dans lequel lesdites barrettes délimitent un diamètre inscrit qui est inférieur au premier diamètre. En particulier, la bride 7 comprend des orifices 16, au nombre de trois sur les figures, qui sont équirépartis autour de l'alésage 15.

On décrit ci-dessous un procédé d'assemblage de la bride de fixation 7 autour de la bague extérieure 3 dans lequel ladite bride est montée autour de ladite bague par coulissement relatif de l'alésage 15 autour de la portée avant 11 pour mettre les barrettes 17, en état de montage, en regard radial de la gorge 10.

En particulier, la fin de course du coulissement relatif de l'alésage 15 peut être définie par mise en appui axial de la bride 7 sur le bord 14 de la portée arrière 12, ledit alésage étant en outre disposé autour de la portée avant 11.

Ensuite, le procédé d'assemblage prévoit de déformer radialement les barrettes 17 pour les disposer au moins en partie dans la gorge 10 afin d'assurer l'assemblage de ladite bride par interférence entre le premier diamètre et le diamètre inscrit délimité par lesdites barrettes. Ainsi, l'assemblage étant réalisé par déformation des barrettes 17, l'effort à appliquer sur la bride 7 reste limité afin de pouvoir bien contrôler l'interférence d'assemblage entre ladite bride et la bague extérieure 3.

La déformation radiale des barrettes 17 peut être réalisée par disposition de doigts 18 d'un outil 19 dans respectivement un orifice (figures 6) puis déplacement axial desdits doigts dans lesdits orifices, lesdits doigts présentant au moins une face 20 d'appui radial sur les barrettes 17 qui est agencée pour pousser lesdites barrettes à l'intérieur de l'alésage 15 lors dudit déplacement.

De façon avantageuse, les barrettes 17 présentent un bossage 21 qui s'étend dans l'orifice 16, les doigts 18 prenant appui sur lesdits bossages pour déformer radialement lesdites barrettes.

En relation avec les figures 4 et 5, l'outil 19 présente un manchon 22 sur le bord avant duquel trois doigts 18 équirépartis s'étendent axialement. En outre, les doigts 18 sont introduits dans les orifices 16 du côté de la portée arrière 12, ledit manchon présentant un diamètre intérieur qui est sensiblement égal au deuxième diamètre afin d'assurer un guidage du déplacement axial des doigts 18 dans les orifices 16.

Les doigts 18 présentent une dimension radiale qui est croissante en fonction de la course de déplacement axial desdits doigts dans les orifices 16. Ainsi, en contrôlant la course de déplacement des doigts 18, on peut facilement déterminer la déformation induite pour les barrettes 17 et donc l'interférence d'assemblage entre la bride 7 et la bague extérieure 3.

Sur les figures, les doigts 18 présentent une section rectangulaire de dimension extérieure sensiblement égale à celle des orifices 16, la face intérieure d'appui 20 des doigts 18 sur les barrettes 17 présentant une géométrie tronconique pour faire varier axialement la dimension radiale desdits doigts.

En particulier, les barrettes 17 peuvent être déformées radialement de sorte que le diamètre inscrit qu'elles délimitent soit supérieur au diamètre extérieur de la gorge 10 afin d'assembler la bride 7 avec un jeu radial. En particulier, un jeu radial de l'ordre de 0,25 mm peut être nécessaire pour monter l'ensemble arbre 1 - roulement dans le carter 2 en vue de la fixation de la bride 7.

La gorge 10 peut présenter une dimension axiale qui est supérieure à la dimension axiale des barrettes 17 afin d'assembler la bride 7 avec un jeu axial. Dans les modes de réalisation représentés, les orifices 16 sont réalisés chacun dans une cavité arrière 23 de la bride 7 qui permet de réduire localement l'épaisseur de ladite bride au niveau des barrettes 17.

Dans cette réalisation, les doigts 18 peuvent être introduits du côté de la portée avant 11, la bride 7 étant alors en appui sur le bord 14 de la portée arrière 12 lors du déplacement axial des doigts 18. Ainsi, les barrettes 17 étant en appui sur le bord 14, on limite la possibilité de déformation axiale des barrettes 17 lors du déplacement des doigts 18 dans les orifices 16.

Sur la figure 3a, les barrettes 17 forment chacune un pont de matière 17a associé de part et d'autre à la bride 7, ledit pont de matière délimitant intérieurement le bord intérieur de l'orifice 16 et extérieurement l'alésage 15, la déformation comprenant le repoussage d'une partie centrale dudit pont à l'intérieur de l'alésage 15 (figure 7).

Sur la figure 3b, les barrettes 17 forment une languette 17b dont un bord est associé à la bride 7 et l'autre bord 24 est libre pour faire déboucher les orifices 16 dans l'alésage 15, la déformation comprenant une rotation du bord libre 24 dans l'alésage 15 autour du bord associé.

## Revendications

1. Procédé d'assemblage d'une bride (7) de fixation autour d'une bague extérieure (3) d'un roulement, ladite bague présentant une gorge périphérique (10) formée entre une portée avant (11) présentant un premier diamètre et une portée arrière (12) présentant un deuxième diamètre qui est supérieur audit premier diamètre, ladite bride présentant un alésage (15) dont le diamètre est compris entre lesdits premier et deuxième diamètres, ledit procédé étant **caractérisé en ce qu'**il comprend les étapes suivantes :
- prévoir une bride (7) comprenant des orifices (16) dont le bord intérieur est équipé d'une barrette (17) déformable radialement entre un état de montage dans lequel lesdites barrettes sont inscrites dans le diamètre de l'alésage (15) et un état déformé dans lequel lesdites barrettes délimitent un diamètre inscrit qui est inférieur au premier diamètre ;
- monter la bride (7) autour de la bague (3) par coulissement relatif de l'alésage (15) autour de la portée avant (11) pour mettre les barrettes (17), en état de montage, en regard radial de la gorge (10) ;
- déformer radialement les barrettes (17) pour les disposer au moins en partie dans la gorge (10) afin d'assurer l'assemblage de ladite bride par interférence entre le premier diamètre et le diamètre inscrit délimité par lesdites barrettes.

2. Procédé d'assemblage selon la revendication 1, **caractérisé en ce que** la bride (7) comprend des orifices (16) qui sont équirépartis autour de l'alésage (15).

3. Procédé d'assemblage selon la revendication 1 ou 2, **caractérisé en ce que** la fin de course du coulissement relatif de l'alésage (15) est définie par mise en appui axial de la bride (7) sur la portée arrière (12).

4. Procédé d'assemblage selon l'une quelconque des revendications 1 à 3, **caractérisé en ce que** la déformation radiale des barrettes (17) est réalisée par disposition de doigts (18) d'un outil (19) dans respectivement un orifice (16) puis déplacement axial desdits doigts dans lesdits orifices, lesdits doigts présentant au moins une face (20) d'appui radial sur les barrettes (17) qui est agencée pour pousser lesdites barrettes à l'intérieur de l'alésage (15) lors dudit déplacement.

5. Procédé d'assemblage selon la revendication 4, **caractérisé en ce que** les doigts (18) présentent une dimension radiale qui est croissante en fonction de la course du déplacement axial desdits doigts dans les orifices (16).

6. Procédé d'assemblage selon la revendication 4 ou 5, **caractérisé en ce que** les doigts (18) sont introduits dans les orifices (16) du côté de la portée avant (11), la bride (7) étant en appui sur la portée arrière (12) lors du déplacement axial desdits doigts.

7. Procédé d'assemblage selon l'une quelconque des revendications 4 à 6, **caractérisé en ce que** les barrettes (17) présentent au moins un bossage (21) qui s'étend dans l'orifice (16), les doigts (18) prenant appui sur lesdits bossages pour déformer radialement lesdites barrettes.

8. Procédé d'assemblage selon l'une quelconque des revendications 1 à 7, **caractérisé en ce que** les barrettes (17) forment chacune un pont de matière (17a) associé de part et d'autre à la bride (7), ledit pont de matière délimitant intérieurement le bord intérieur de l'orifice (16) et extérieurement l'alésage (15), la déformation comprenant le repoussage d'une partie centrale dudit pont à l'intérieur de l'alésage (15).

9. Procédé d'assemblage selon l'une quelconque des revendications 1 à 7, **caractérisé en ce que** les barrettes (17) forment une languette (17b) dont un bord est associé à la bride (7) et l'autre bord (24) est libre pour faire déboucher les orifices (16) dans l'alésage (15), la déformation comprenant une rotation du bord libre (24) dans l'alésage (15) autour du bord associé.

10. Procédé d'assemblage selon l'une quelconque des revendications 1 à 9, **caractérisé en ce que** la gorge (10) présente une dimension axiale qui est supérieure à la dimension axiale des barrettes (17) afin d'assembler la bride (7) avec un jeu axial.

11. Procédé d'assemblage selon la revendication 10, **caractérisé en ce que** les orifices (16) sont réalisés chacun dans une cavité arrière (23) de la bride (7).

12. Procédé d'assemblage selon l'une quelconque des revendications 1 à 11, **caractérisé en ce que** la gorge (10) présente un diamètre extérieur, les barrettes (17) étant déformées radialement de sorte que le diamètre inscrit qu'elles délimitent soit supérieur audit diamètre extérieur afin d'assembler la bride (7) avec un jeu radial.

13. Roulement comprenant une bague extérieure (3), une bague intérieure (4) et des corps roulants (5) disposés entre lesdites bagues pour permettre leur rotation relative, ledit roulement comprenant en outre une bride (7) de fixation qui est assemblée autour de la bague extérieure (3) par mise en oeuvre d'un procédé selon l'une quelconque des revendications 1 à 12, ladite bague présentant une gorge périphérique (10) formée entre une portée avant (11) présentant un premier diamètre et une portée arrière (12) présentant un deuxième diamètre qui est supérieur audit premier diamètre, ladite bride présentant un alésage (15) dont le diamètre est compris entre lesdits premier et deuxième diamètres, ladite bride comprenant des orifices (16) dont le bord intérieur est équipé d'une barrette (17) qui est disposée au moins en partie dans la gorge (10), lesdites barrettes délimitant un diamètre inscrit qui est inférieur au premier diamètre.

14. Ensemble comprenant un arbre tournant (1) et un carter (2) dans lequel l'arbre est monté dans le carter au moyen d'un roulement selon la revendication 13, ledit arbre étant solidarisé à la bague intérieure (4) et la bride (7) étant fixée au carter (2).

## Patentansprüche

1. Verfahren zum Montieren eines Befestigungsflansches (7) an einem Außenring (3) eines Lagers, wobei der besagte Ring eine umlaufende Nut (10) aufweist, die zwischen einer vorderen Lagerfläche (11), die einen ersten Durchmesser aufweist, und einer hinteren Lagerfläche (12), die einen zweiten Durchmesser aufweist, der größer ist, als der besagte erste Durchmesser, gebildet wird, wobei der besagte Flansch eine Bohrung (15) aufweist, deren Durchmesser zwischen den besagten ersten und zweiten Durchmessern enthalten ist, und das Verfahren **dadurch gekennzeichnet ist, dass** es die folgenden Schritte umfasst:
- das Vorsehen eines Flansches (7), Öffnungen (16) umfassend, deren unterer Rand mit einem Steg (17) ausgestattet ist, der radial zwischen einem Montagezustand, in dem die besagten Stege im Durchmesser der Bohrung (15) eingeschrieben sind, und einem verformten Zustand verformt werden kann, in dem die besagten Stege einen eingeschriebenen Durchmesser eingrenzen, welcher kleiner ist, als der erste Durchmesser;
- die Montage des Flansches (7) am Ring (3) durch verhältnismäßiges Verschieben der Bohrung (15) um die vordere Lagerfläche (11), um die Stege (17) in den Montagezustand radial gegenüber der Nut (10) zu bringen;
- das radiale Verformen der Stege (17), um sie zumindest teilweise in der Nut (10) anzuordnen, um für die Montage des besagten Flansches durch Überschneidung zwischen dem ersten Durchmesser und dem eingeschriebenen Durchmesser zu sorgen, der von den besagten Stegen eingegrenzt wird.

2. Montageverfahren nach Anspruch 1, **dadurch gekennzeichnet, dass** der Flansch (7) Öffnungen (16) umfasst, die jeweils in gleichen Abständen in der Bohrung (15) angeordnet sind.

3. Montageverfahren nach Anspruch 1 oder 2, **dadurch gekennzeichnet, dass** die verhältnismäßige Verschiebeendlage der Bohrung (15) durch das axiale Anlegen des Flansches (7) an die hintere Lagerfläche (12) definiert wird.

4. Montageverfahren nach irgendeinem der Ansprüche 1 bis 3, **dadurch gekennzeichnet, dass** die radiale Verformung der Stege (17) durch Anordnung von Fingern (18) eines Werkzeugs (19) in jeweils einer Öffnung (16) und danach durch die axiale Bewegung der besagten Finger in den besagten Öffnungen erfolgt, wobei die besagten Finger zumindest eine radiale Fläche (20) zum Anlegen an die Stege (17) aufweisen, die angeordnet ist, um die besagten Stege bei der besagten Bewegung im Inneren der Bohrung (15) anzuschieben.

5. Montageverfahren nach Anspruch 4, **dadurch gekennzeichnet, dass** die Finger (18) eine radiale Abmessung aufweisen, die in Abhängigkeit vom axialen Weg der besagten Finger in den Öffnungen (16) größer wird.

6. Montageverfahren nach Anspruch 4 oder 5, **dadurch gekennzeichnet, dass** die Finger (18) auf Seiten der vorderen Lagerfläche (11) in die Öffnungen (16) eingeführt werden, und der Flansch (7) beim axialen Verfahren der besagten Finger an der hinteren Lagerfläche (12) anliegt.

7. Montageverfahren nach irgendeinem der Ansprüche 4 bis 6, **dadurch gekennzeichnet, dass** die Stege (17) zumindest einen Vorsprung (21) aufweisen, der sich in der Öffnung (16) erstreckt, wobei sich die Finger (18) an den besagten Vorsprüngen anlegen, um die besagten Stege radial zu verformen.

8. Montageverfahren nach irgendeinem der Ansprüche 1 bis 7, **dadurch gekennzeichnet, dass** die Stege (17) jeweils eine Materialbrücke (17a) bilden, die auf beiden Seiten zum Flansch (7) gehört, wobei die besagte Materialbrücke innen den inneren Rand der Öffnung (16) und außen die Bohrung (15) eingrenzt, wobei die Verformung das Zurückdrücken eines mittleren Abschnitts der besagten Brücke ins Innere der Bohrung (15) umfasst.

9. Montageverfahren nach irgendeinem der Ansprüche 1 bis 7, **dadurch gekennzeichnet, dass** die Stege (17) eine Zunge (17b) bilden, wobei ein Rand derselben zum Flansch (7) gehört und der andere Rand (24) frei ist, um die Öffnungen (16) in die Bohrung (15) einmünden zu lassen, und die Verformung eine Drehung des freien Randes (24) in die Bohrung (15) am zugehörigen Rand umfasst.

10. Montageverfahren nach irgendeinem der Ansprüche 1 bis 9, **dadurch gekennzeichnet, dass** die Nut (10) eine axiale Abmessung aufweist, die größer ist, als die axiale Abmessung der Stege (17), um den Flansch (7) mit einem axialen Spiel zu montieren.

11. Montageverfahren nach Anspruch 10, **dadurch gekennzeichnet, dass** die Öffnungen (16) jeweils in einer hinteren Vertiefung (23) des Flansches (7) ausgeführt werden.

12. Montageverfahren nach irgendeinem der Ansprüche 1 bis 11, **dadurch gekennzeichnet, dass** die Nut (10) einen Außendurchmesser aufweist, und die Stege (17) radial verformt werden, sodass der eingeschriebene Durchmesser, den sie eingrenzen, größer ist, als der besagte Außendurchmesser, um den Flansch (7) mit einem radialen Spiel zu montieren.

13. Lager, einen Außenring (3), einen Innenring (4) und Rollkörper (5) umfassend, die zwischen den besagten Ringen angeordnet sind, um ihre Drehung zueinander zu ermöglichen, wobei das besagte Lager darüber hinaus einen Befestigungsflansch (7) umfasst, der unter Anwendung eines Verfahrens nach irgendeinem der Ansprüche 1 bis 12 am Außenring (3) montiert ist, wobei der besagte Ring eine umlaufende Nut (10) aufweist, die zwischen einer vorderen Lagerfläche (11), die einen ersten Durchmesser aufweist, und einer hinteren Lagerfläche (12), die einen zweiten Durchmesser aufweist, der größer ist, als der besagte erste Durchmesser, gebildet wird, wobei der besagte Flansch eine Bohrung (15) aufweist, deren Durchmesser zwischen den besagten ersten und zweiten Durchmessern enthalten ist, und der besagte Flansch Öffnungen (16) umfasst, deren innerer Rand mit einem Steg (17) ausgestattet ist, der zumindest teilweise in der Nut (10) angeordnet ist, und die besagten Stege einen eingeschriebenen Durchmesser eingrenzen, der kleiner ist, als der erste Durchmesser.

14. Baugruppe umfassend eine drehende Welle (1) und ein Gehäuse (2), in der die Welle mit einem Lager nach Anspruch 13 im Gehäuse montiert ist, und die besagte Welle fest mit dem Innenring (4) verbunden ist, und der Flansch (7) am Gehäuse (2) befestigt ist.

## Claims

1. Method for assembling a fastening clamp (7) around an outer ring (3) of a bearing, said ring having a peripheral groove (10) formed between a front bearing surface (11) having a first diameter and a rear bearing surface (12) having a second diameter that is greater than said first diameter, said clamp having a bore (15) of which the diameter is between said first and second diameters, said method being **characterised in that** it comprises the following steps:
- providing a clamp (7) comprising orifices (16) of which the inner edge is provided with a bar (17) radially deformable between an assembly state wherein said bars are inscribed in the diameter of the bore (15) and a deformed state wherein said bars delimit an inscribed diameter that is less than the first diameter;
- mounting the clamp (7) around the ring (3) by relative sliding of the bore (15) around the front bearing surface (11) in order to place the bars (17), in assembly state, radially across from the groove (10);
- radially deforming the bars (17) in order to arrange them at least partially in the groove (10) in order to provide for the assembling of said clamp by interference between the first diameter and the inscribed circle diameter delimited by said bars.

2. Method for assembling according to claim 1, **characterised in that** the clamp (7) comprises orifices (16) which are equally distributed around the bore (15).

3. Method for assembling according to claim 1 or 2, **characterised in that** the end of travel of the relative sliding of the bore (15) is defined by the axial bearing of the clamp (7) on the rear bearing surface (12).

4. Method for assembling according to any of claims 1 to 3, **characterised in that** the radial deformation of the bars (17) is carried out by arranging fingers (18) of a tool (19) in respectively an orifice (16) the axial displacement of said fingers in said orifices, with said fingers having at least one radial bearing surface (20) on the bars (17) which is arranged to push said bars inside the bore (15) during said displacement.

5. Method for assembling according to claim 4, **characterised in that** the fingers (18) have a radial dimension which is increasing according to the course of axial displacement of said fingers in the orifices (16).

6. Method for assembling according to claim 4 or 5, **characterised in that** the fingers (18) are introduced in the orifices (16) of the side of the front bearing surface (11), with the clamp (7) bearing on the rear bearing surface (12) during the axial displacement of said fingers.

7. Method for assembling according to any of claims 4 to 6, **characterised in that** the bars (17) have a least one boss (21) that extends into the orifice (16), with the fingers (18) bearing on said bosses in order to radially deform said bars.

8. Method for assembling according to any of claims 1 to 7, **characterised in that** the bars (17) each form a material bridging (17a) associated on either side with the clamp (7), said material bridging delimiting interiorly the inner edge of the orifice (16) and exteriorly the bore (15), with the deformation comprising the pushing of a central portion of said bridge inside the bore (15).

9. Method for assembling according to any of claims 1 to 7, **characterised in that** the bars (17) form a tab (17b) of which one edge is associated to the clamp (7) and the other edge (24) is free to have the orifices (16) exit into the bore (15), with the deformation comprising a rotation of the free edge (24) in the bore (15) around the associated edge.

10. Method for assembling according to any of claims 1 to 9, **characterised in that** the groove (10) has an axial dimension that is greater than the axial dimension of the bars (17) in order to assemble the clamp (7) with an axial clearance.

11. Method for assembling according to claim 10, **characterised in that** the orifices (16) are each carried out in a rear cavity (23) of the clamp (7).

12. Method for assembling according to any of claims 1 to 11, **characterised in that** the groove (10) has an outer diameter, with the bars (17) being radially formed in such a way that the inscribed diameter that they delimit is greater than said outer diameter in order to assemble the clamp (7) with a radial clearance.

13. Bearing comprising an outer ring (3), an inner ring (4) and rolling bodies (5) arranged between said rings in order to allow for their relative rotation, said bearing further comprising a fastening clamp (7) that is assembled around the outer ring (3) through the implementation of a method according to any of claims 1 to 12, with said ring having a peripheral groove (10) formed between a front bearing surface (11) having a first diameter and a rear bearing surface (12) having a second diameter that is greater than said first diameter, with said clamp having a bore (15) of which the diameter is between said first and second diameters, with said clamp comprising orifices (16) of which the inner edge is provided with a bar (17) which is arranged at least partially in the groove (10), with said bars delimiting an inscribed diameter that is less than the first diameter.

14. Unit comprising a rotating shaft (1) and a casing (2) wherein the shaft is mounted in the casing by means of a bearing according to claim 13, with said shaft being integral with the inner ring (4) and the clamp (7) being fixed to the casing (2).
